# Europäisches Patentamt

# European Patent Office

# Office européen des brevets

(11) Publication number: **0 062 678**
**B1**

# EUROPEAN PATENT SPECIFICATION

(45) Date of publication of patent specification: **29.10.86**

(51) Int. Cl.⁴: **B 64 D 37/06, B 64 G 1/66**

(21) Application number: **81903149.3**

(22) Date of filing: **27.10.81**

(86) International application number:
**PCT/US81/01438**

(87) International publication number:
**WO 82/01530 13.05.82 Gazette 82/12**

(54) **VORTEX INHIBITING TANK OUTLET STRUCTURE.**

(30) Priority: **27.10.80 US 200678**

(43) Date of publication of application:
**20.10.82 Bulletin 82/42**

(45) Publication of the grant of the patent:
**29.10.86 Bulletin 86/44**

(84) Designated Contracting States:
**DE FR GB**

(56) References cited:
**FR-A- 659 390**
**IT-A- 587 462**
**US-A-2 884 937**
**US-A-2 920 648**
**US-A-3 072 140**
**US-A-3 202 160**

**IEEE transactions on Geoscience and remote sensors, Vol. Ge-1B, No. 1, issued January 1980, US, Nothwang, "Pioneer Venus Spacecraft Design and Operation", Fig. 1.**

(73) Proprietor: **Hughes Aircraft Company**
**7200 Hughes Terrace P.O. Box 45066**
**Los Angeles California 90045-0066 (US)**

(72) Inventor: **SALVATORE, Jeremiah, O.**
**316 Calle De Andalucia**
**Redondo Beach, CA 90277 (US)**

(74) Representative: **Colgan, Stephen James et al**
**CARPMAELS & RANSFORD 43 Bloomsbury Square**
**London WC1A 2RA. (GB)**

Courier Press, Leamington Spa, England.

## Description

### Background of the Invention

This invention is directed to a vortex inhibiting tank outlet structure wherein the tank outlet is positioned away from the local gravity vector in the tank.

When the tank is used to supply liquid, the ingestion of vapor from over the liquid into the liquid outlet line may cause serious problems. In one case, where the tank is pressurized with an inert gas and liquid fuel is supplied from the tank outlet, the ingestion of pressurizing gas into the outlet line is serious and may cause flame-out where the fuel is burned, leading to overheating, chugging and possibly explosion.

Prior efforts led to the conclusion that anti-vortexing baffles were the best solution to the problem, and these were universally adopted. However, different problems occur in zero and low gravity force operations.

In spinning spacecraft, it can be argued that a coriolis-type moment is produced by an interaction of fluid motion moving radially inward towards the drain, combined with the angular-spin rate. This moment could be the driver in the vortexing, but this is difficult to qualify. Other possibilities of swirl initiation are angular rates left over from satellite orientation and random inputs caused by orientation correction pulses. These possibilities become particularly apparent in spacecraft structures where the local gravity force is either zero or much smaller than earth gravity. Accordingly, there is a need for a means for inhibiting vortexing at the outlet of a tank structure in a space vehicle.

According to the invention there is provided a closed spherical tank for the storage and discharge of liquid in a space vehicle wherein the local gravitational vector is produced by spinning of the vehicle, said tank comprising a closed spherical tank shell enclosing a spherical tank volume for the containment of liquid, there being an axis through the centre of the tank in line with the local gravity vector, and an outlet tube extending from an opening in the shell for the discharge of liquid, the opening in the shell being displaced angularly away from the position where the said axis intersects the tank shell.

US—A—2884937 describes a generally spherical liquid propellant tank wherein the outlet tube extends angularly away from the tank centre line axis in line with the local gravity vector at the position where the axis intersects the tank shell. There is no disclosure in this document of using the tank in a space vehicle where the local gravity vector is produced by spinning the vehicle. Furthermore, since the outlet is not spaced away from the intersection of the axis with the shell, the tank would not experience nor solve the problem the present invention is concerned with.

Preferred features of the invention will now be described, by way of example, with reference to the accompanying drawings, wherein:—

FIG. 1 is a perspective view of the satellite in space where the vortex inhibiting tank outlet structure of this invention may be employed.

FIG. 2 is a section taken generally along line 2—2 of the satellite of FIG. 1, but showing the satellite antennas in the stowed position, with parts of the satellite structure broken away.

FIG. 3 is a center line section through a tank and its outlet in accordance with the prior art.

FIG. 4 is a center line section through the tank of this invention, showing its outlet away from the local gravity vector.

### Description of the Preferred Embodiment

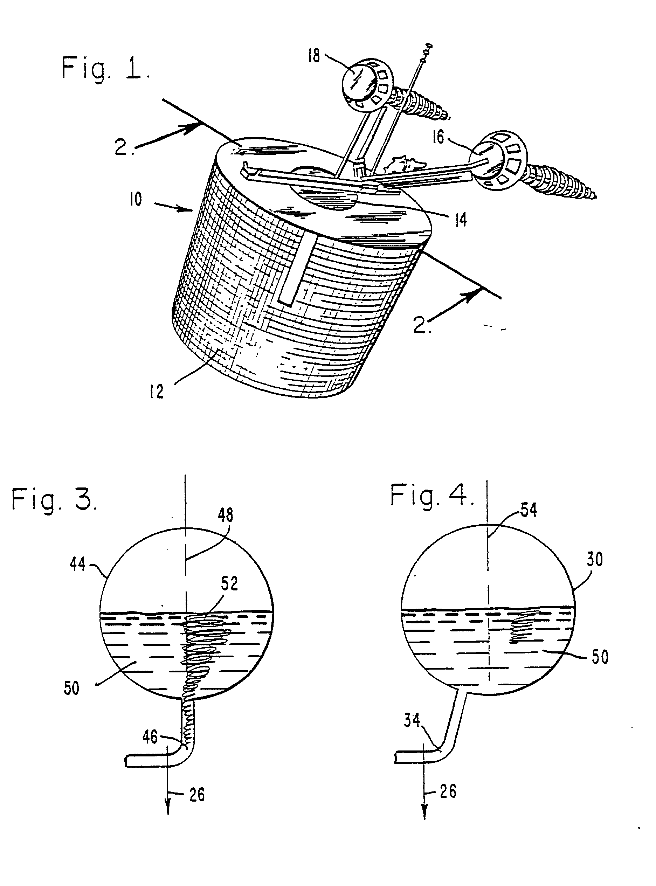

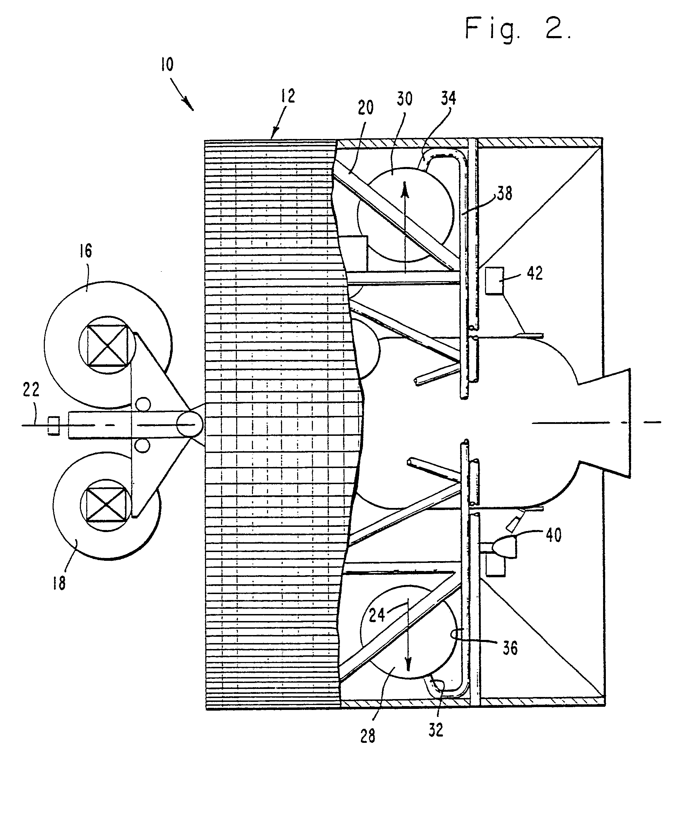

Satellite 10 shown in FIGS. 1 and 2 has a cylindrical spinning body 12 which is illustrated as being covered with solar cells to supply the electric power requirements of the satellite electrical systems. The despun platform 14, see FIG. 1, is rotatively mounted with respect to the spinning body 12 and rotates with respect thereto so that antennas 16 and 18 mounted thereon can be directed as desired. Quite often the antennas are directed toward earth. In FIG. 2, the antennas 16 and 18 are shown in the stowed position, for economy of drawing. Spinning body 12 has an interior frame 20 on which the various parts are mounted. The spinning body 12 rotates on axis 22 to produce a radially outward accelerational force from that axis. Vectors 24 and 26 represent the radially outward local G force, which usually is a small fraction of the earth's gravity acceleration.

Tanks 28 and 30 are spherical propellant tanks formed of a structural shell which constrains the internal tank pressure and defines the tank as a vessel which has a volume. The tanks respectively supply liquid propellant out of outlets 32 and 34 to propellant lines 36 and 38. The lines are connected through suitable control valves to thrusters which are oriented in various directions to be used for attitude control and station keeping. Thrusters 40 and 42 are illustrated and there are usually sufficient thrusters to control attitude on three axes. Sometimes, station keeping thrusters are also supplied from the same fuel propellant system. The propellant may comprise two liquids in a bipropellant system or the single liquid in a monopropellant system.

Since there is a local gravity vector resulting from the spinning of body 12, no bladder or other mechanical expulsion device is necessary for the expulsion of fluid from the tanks. In FIG. 4, the local gravity vector is indicated at 26.

In the prior art tank 44 illustrated in FIG. 3, the tank outlet 46 was on a central axis 48 through the tank which was parallel to the local gravity vector 26. In other words, outlet 46 was at the bottom of the tank, directly on the tank axis. In view of this gravity vector, withdrawal of the propellant liquid 50 from the tank caused a vortex 52 to form. In view of the very low acceleration along the vector 26, even when there is a substantial amount of liquid 50 in the tank 44, due to the vortex, pressurization gas or vapor over the liquid may be discharged out of the outlet 46.

This invention overcomes the vortexing problem. The tank 30 of this invention is illustrated in FIGS. 2 and 4, and it has an outlet 34 which is positioned away from the center line axis 54 of tank 30 which is parallel to the local gravity vector 26. While it has been shown that angular positioning of outlet 34 away from axis 54 from 1° upward is operative, an angle of 10° between the axis 50 and outlet 34 is considered preferable. This angle is small enough that little unused liquid is left in the bottom of tank 30, but the angle is larger than the minimum 1° angle required to inhibit vortexing.

As illustrated in FIG. 4, the tank 30 is formed of a spherical shell and axis 54 passes through the geometric axis of the spherical shell. Axis 54 is parallel to the local gravity vector 26. Outlet 34 is secured to the tank shell and forms the tank outlet structure, which is part of the tank in accordance with this invention. As indicated in FIG. 4, outlet tube 34 is away from axis 54. It has been found that so much as a 1° separation of the outlet 74 from the axis 54 has a substantial effect on vortex inhibition. However, for mechanical safety, the outlet 34 is positioned from 5 to 10° away from axis 54. Thus, the angle of effectiveness is as little as 1°, and when the angle gets up into the region of 15° the amount of liquid left in the spherical tank below the outlet becomes excessive. Therefore, a more limited and more preferred range of angularity of the tank outlet structure is from 5 to 10°.

There are a plurality of mechanisms which provide some propellant angular momentum around the tank center line radial vector 54 which is normal to the spin axis. The most likely generating functions are motion amplification due to boundary layer interactions associated with curved streamlines, and irrotational inphase sloshing, driven by spin axis nutation, turning into reversing-periodically-rotational flow. In addition, there is a coriolis type moment produced by an interaction of fluid moving radially outward towards the drain combined with the spin angular rate. Other causal possibilities of swirl initiation are angular rates left over from the orientation maneuvers, and random inputs caused by a series of station keeping pulses. These factors are not well understood, and as a result it becomes impossible to eliminate the vortexing by eliminating the causes.

Baffles can be used, but they cause a pressure drop and add weight to the structure. As expected, higher flow rates produce stronger vortexing. However, the vortexing phenomena was found to be independent of fraction of tank fill, direction of initial fluid rotation, tank pressure variations and kinematic viscosity of the liquid. Decreases in outlet tube diameter cause stronger vortexting due to increased flow velocity.

Thus, improved vortex inhibition is needed where the vapor or pressurizing gas over the liquid in the tank should not be delivered from the tank outlet at least until the tank is empty of liquid.

## Claims

1. A closed spherical tank (28, 30) for the storage and discharge of liquid in a space vehicle (10) wherein the local gravitational vector is produced by spinning of the vehicle, said tank comprising a closed spherical tank shell enclosing a spherical tank volume for the containment of liquid (50), there being an axis (54) through the centre of the tank in line with the local gravity vector (24, 26), and an outlet tube (34) extending from an opening in the shell for the discharge of liquid, the opening in the shell being displaced angularly away from the position where the said axis intersects the tank shell.

2. A tank according to claim 1 wherein the opening is displaced from 1 to 15° away from said position.

3. A tank according to claim 2 wherein the opening is displaced from 5 to 10° away from said position.

## Revendications

1. Un réservoir sphérique fermé (28, 30) pour le stockage et l'écoulement de liquide dans un véhicule spatial (10) dans lequel le vecteur gravitationnel local est produit par la mise en rotation du véhicule, ledit réservoir comprenant une coque sphérique de réservoir, fermée et renfermant un volume sphérique de réservoir pour contenir le liquide (50), avec un axe (54) passant par le centre du réservoir et aligné avec le vecteur de gravité local (24, 26), et un tuyau de sortie (34) partant d'une ouverture pratiquée dans le coque pour l'écoulement du liquide, l'ouverture dans la coque étant décalée angulairement par rapport à l'endroit où ledit axe coupe la coque de réservoir.

2. Un réservoir selon la revendication 1 dans lequel l'ouverture est décalée de 1 à 15° dudit endroit.

3. Un réservoir selon la revendication 2 dans lequel l'ouverture est décalée de 5 à 10° dudit endroit.

## Patentansprüche

1. Ein geschlossener sphärischer Tank (28, 30) zur Aufbewahrung und zum Ablassen von Flüssigkeiten in einem Raumschiff (10), wobei der örtliche Gravitationsvektor durch Drehungen des Raumschiffes erzeugt wird, mit einer geschlossenen sphärischen Tankwand, die ein sphärisches Volumen einschließt, zur Aufbewahrung von Flüssigkeiten (50), mit einer Achse (54) durch die Mitte des Tanks, die mit dem örtlichen Gravitationsvektor (24, 26) zusammenfällt und einem Auslaßrohr (34), das sich aus einer Öffnung in der Wand zum Ablas-

5        0 062 678        6

sen der Flüssigkeit erstreckt, wobei die Öffnung in der Wand um einen bestimmten Winkel von der Position, wo die Achse sich mit der Tankwand schneidet, versetzt ist.

2. Tank nach Anspruch 1, bei dem die Öffnung um 1° bis 15° von der genannten Position versetzt ist.

3. Tank nach Anspruch 2, bei dem die Öffnung um 5° bis 10° von der genannten Position versetzt ist.

Fig. 1.

2.

18

16

10

14

12

Fig. 3.

44

48

52

50

46

26

Fig. 4.

54

30

50

34

26

1

Fig. 2.